**Europäisches Patentamt**

**European Patent Office**

**Office européen des brevets**

(19)

(11) **EP 1 135 274 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.⁷: **B60K 31/02**

(21) Anmeldenummer: **99957863.6**

(22) Anmeldetag: **06.10.1999**

(86) Internationale Anmeldenummer:
**PCT/DE99/03219**

(87) Internationale Veröffentlichungsnummer:
**WO 00/033151 (08.06.2000 Gazette 2000/23)**

(54) **VERFAHREN UND VORRICHTUNG ZUR BESTIMMUNG EINES ZUKÜNFTIGEN KURSBEREICHS EINES FAHRZEUGS**

METHOD AND DEVICE FOR DETERMINING THE FUTURE COURSE OF A MOTOR VEHICLE

PROCEDE ET DISPOSITIF PERMETTANT DE DETERMINER LA FUTURE TRAJECTOIRE D'UN VEHICULE

(84) Benannte Vertragsstaaten:
**AT DE FR GB**

(30) Priorität: **01.12.1998 DE 19855400**

(43) Veröffentlichungstag der Anmeldung:
**26.09.2001 Patentblatt 2001/39**

(73) Patentinhaber: **ROBERT BOSCH GMBH**
**70442 Stuttgart (DE)**

(72) Erfinder:
• **MICHI, Harald**
**D-75248 Ölbronn-Dürren (DE)**

• **SCHERL, Michael**
**D-71679 Asperg (DE)**
• **LICHTENBERG, Bernd**
**D-71665 Vaihingen/Enz (DE)**
• **UHLER, Werner**
**D-76646 Bruchsal (DE)**

(56) Entgegenhaltungen:
**US-A- 5 197 562        US-A- 5 349 520**

• **PATENT ABSTRACTS OF JAPAN vol. 1997, no. 12, 25. Dezember 1997 (1997-12-25) & JP 09 207609 A (FUJITSU TEN LTD), 12. August 1997 (1997-08-12)**

**Beschreibung**

Die vorliegende Erfindung betrifft ein Verfahren sowie eine Vorrichtung zur Bestimmung eines zukünftigen Kursbereichs eines Kraftfahrzeugs. Sie kann angewendet werden beispielsweise im Rahmen einer adaptiven Fahrgeschwindigkeits- oder Abstandsregelung eines Fahrzeugs, einer adaptiven Leuchtweitenanpassung oder auch einfach zum Erkennen kritischer Situationen. Voraussetzung ist, daß das Fahrzeug mit wenigstens einem Sensor ausgerüstet ist, der vorausfahrende Fahrzeuge und stationäre Objekte im Vorfeld des Fahrzeugs erkennen sowie wenigstens deren Position bestimmen kann. Solche Sensoren können beispielsweise als Radar-, Laser- oder auch als Videosensor ausgebildet sein. Die Erfindung wird vorzugsweise im Zusammenhang mit einer adaptiven Fahrgeschwindigkeits- oder Abstandsregelung eines Fahrzeugs verwendet, da ein solcher Sensor bei dieser Anwendung bereits vorhanden ist.

Stand der Technik

In den vergangenen Jahren sind zahlreiche Veröffentlichungen bekannt geworden, die sich mit einer automatischen Regelung der Geschwindigkeit eines Kraftfahrzeugs unter Berücksichtigung des Abstandes zu vorausfahrenden Fahrzeugen beschäftigen. Solche Systeme werden häufig als Adaptive Cruise Control (ACC) bzw. im Deutschen als adaptive oder dynamische Fahrgeschwindigkeitsregler bezeichnet. Ein grundlegendes Problem bei solchen Systemen ist angesichts heutiger Verkehrsverhältnisse eine automatisierte Entscheidung, welches von mehreren vorausfahrenden Fahrzeugen für die Geschwindigkeits- oder Abstandsregelung relevant bzw. am relevantesten ist. Besonders schwierig ist diese Entscheidung in dem Fall, daß die Straße, auf der sich das geregelte Fahrzeug bewegt, mehrspurig und kurvig ist. In diesem Fall werden durch einen Abstandssensor, der unter anderem zur Detektion vorausfahrender Fahrzeuge dient, in der Regel auch Fahrzeuge detektiert, die sich auf benachbarten Fahrspuren befinden und dementsprechend für eine Abstandsregelung nur eine untergeordnete Relevanz besitzen.

Dementsprechend besteht bei einem ACC-System das Bedürfnis, einen zukünftigen Kursverlauf beziehungsweise einen zukünftigen Kursbereich des geregelten Fahrzeugs zu bestimmen, um anhand der Kenntnis dieses Bereichs das jeweils relevanteste vorausfahrende Fahrzeug oder umgekehrt das zu einem momentanen Zeitpunkt gefährlichste Hindernis zu bestimmen. Beide Größen, sowohl der Kursverlauf als auch der Kursbereich orientieren sich grundsätzlich am Verlauf der Straße, berücksichtigen im Optimalfall jedoch auch gegebenenfalls stattfindende Spurwechsel- oder Abbiegevorgänge des geregelten Fahrzeugs. Der Begriff "zukünftiger Kursbereich" unterscheidet sich dabei im folgenden von dem Begriff "zukünftiger Kursverlauf" dahingehend, daß er den gesamten räumlichen Bereich, in dem sich das geregelte Fahrzeug voraussichtlich bewegen wird, beinhaltet. Dies bedeutet, daß er auch die jeweils benötigte Breite des Kraftfahrzeugs berücksichtigt.

Derzeit bekannte Lösungen zu der oben genannten Problemstellung sind beispielsweise in der Veröffentlichung "Adaptive Cruise Control - System Aspects and Development Trends" von Winner, Witte et. al., veröffentlicht als SAE Technical Paper Series No 961010 auf der SAE vom 26. bis 29. Februar 1996 beschrieben. Demnach ist die einfachste Art, einen zukünftigen Kurs eines geregelten Fahrzeugs vorherzusagen, die Annahme einer geradlinigen Bewegung. Es ist jedoch offensichtlich, daß diese Art der Vorhersage bei Kurven oder Spurwechseln nicht funktioniert. Ein komplexerer Fall, der für weite Bereiche jedoch hinreichende Ergebnisse liefert, ist die Annahme eines Kurses mit einer konstanten Krümmung. Diese wird beispielsweise anhand einer Differenz von Radgeschwindigkeiten, anhand eines Lenk- oder Lenkradwinkels, anhand von Querbeschleunigungen und/oder anhand von Gierraten bestimmt. Entsprechende Verfahren sind aus dem Bereich der Fahrdynamikregelung bekannt. Nachteil dieses Verfahrens ist, daß der zukünftige Kursverlauf oder Kursbereich nur jeweils anhand des aktuellen Kurses geschätzt wird. Somit entstehen auch hier bei jeder Änderung des Kurses, beispielsweise beim Ein- oder Ausfahren in Kurven Fehler. Eine weitere Möglichkeit zur Vorhersage eines Kursverlaufs, die ebenfalls in der genannten Veröffentlichung erwähnt ist, ist eine Verwendung von Navigationssystemen. Die Grenzen dieses Verfahren hängen jedoch von der Aktualität und der Genauigkeit der zur Verfügung stehenden Karten sowie der Fähigkeit des Systems zur Bestimmung der jeweils aktuellen Position des Fahrzeugs ab. Die Vorhersage ist insbesondere in Baustellenbereichen oder bei neuen Straßen fehlerhaft. Als weitere Möglichkeit wird in der genannten Veröffentlichung eine Vorhersage des Straßenverlaufs oder der Spur basierend auf Radardaten genannt. Stationäre Objekte wie Reflektoren oder Leitplanken, die von einem Signalprozessor detektiert werden, werden verwendet, um die Straßenbegrenzungen zu rekonstruieren. Entsprechend der Veröffentlichung ist bisher jedoch wenig über die Qualität und die Zuverlässigkeit dieses Verfahrens bekannt.

In der US 4,786,164 ist ein System und ein Verfahren zur Detektion einer Entfernung zwischen zwei Fahrzeugen beschrieben, die sich in derselben Verkehrsspur bewegen. Die Bestimmung der Fahrspur, in der sich jedes der beiden Fahrzeuge bewegt, erfolgt dabei anhand eines Vergleichs von Winkeln, unter denen Reflektoren, die an beiden Seiten der Straße verteilt sind, detektiert werden. Das hier beschriebene Verfahren ist jedoch nur anwendbar, wenn tatsächlich auf beiden Seiten einer Straße geeignete Reflektoren zur Verfügung stehen und damit abhängig von infrastrukturellen Gegebenheiten.

In der DE 196 14 061 A1 ist ein System zur Steuerung der Entfernung zu einem vorausfahrenden Fahrzeug auf der Grundlage einer einstellbaren Wahrscheinlichkeitsverteilung beschrieben. Dieses beschriebene System weist eine Krümmungsbestimmungseinrichtung auf, in der die Krümmung einer Straße anhand eines Lenkwinkels und einer Fahrzeuggeschwindigkeit bestimmt wird. Zur Verbesserung der Zuverlässigkeit wird gemäß einer ersten Modifikation der Lenkwinkel auf der Grundlage der Bewegung eines spezifizierten stationären Objekts bestimmt. Dazu werden die Orte eines stationären Objekts relativ zu einem bewegten Systemfahrzeug in gleichmäßigen Zeitabständen überwacht. Die Orte werden dann als Kreisbogen definiert, um die Krümmung der Straße zu berechnen, auf der das Systemfahrzeug fährt. Gemäß einer zweiten Modifikation kann eine scharfe Kurve der Straße ebenfalls anhand eines stationären Objekts erkannt werden. Gemäß einer vierten Modifikation kann die berechnete Krümmung erhöht oder reduziert werden, wenn ein Abbiegeanzeiger die rechte oder die linke Richtung anzeigt.

Gemäß einer zehnten Modifikation ist es möglich, anhand eines Navigationssystems, beispielsweise eines GPS-Systems zu bestimmen, ob eine Kurve in einer Vorwärtsrichtung des Systemfahrzeugs vorliegt oder nicht. Keines der in dieser Schrift vorgestellten Verfahren beseitigt jedoch die bereits im einzelnen genannten Nachteile.

Aus der DE 41 33 882 A1 ist ein Verfahren zum selbständigen Nachführen eines Fahrzeugs auf der Spur eines ganz bestimmten vorausfahrenden Fahrzeugs bekannt. Dazu wird mittels einer elektronischen Kamera der signifikante Heckbereich eines Führungsfahrzeugs überwacht und näherungsweise der Seitenversatz zu diesem bestimmt. Das Ziel ist die Gewinnung von Ansteuersignalen für die Lenkung des die Kamera tragenden Fahrzeugs.

Aus der DE 43 41 689 A1 ist ein System zum Erfassen eines vorausfahrenden Fahrzeugs bekannt. Es wird von einer Mittellinie ausgegangen, die die Verlängerung der Fahrzeugachse darstellt. Um diese Linie herum werden Bereiche unterschiedlicher Wahrscheinlichkeiten definiert, die dazu dienen ein erfaßtes Ziel als in der Spur befindlich oder als nicht relevant zu erkennen. Die Krümmung der vorausliegenden Straße wird anhand des aktuellen Lenkwinkels und der aktuellen Fahrzeuggeschwindigkeit berechnet. In Abhängigkeit von dieser prognostizierten Krümmung wird in der Entfernung, in der ein anderes Fahrzeug detektiert wurde eine Versetzung bestimmt und die zuvor bestimmte Wahrscheinlichkeitsverteilung um diesen Wert verschoben.

Aus der noch nicht vorveröffentlichten deutschen Patentanmeldung 197 22 947.6-32 ist ein Verfahren und eine Vorrichtung zur Bestimmung eines zukünftigen Kursbereiches eines Fahrzeugs bekannt. Darin werden anhand der detektierten Positionen der vorausfahrenden Fahrzeuge deren Kursverläufe beobachtet und jeweils der Querversatz zur eigenen Position bestimmt. Dies geschieht jeweils ab dem Zeitpunkt, an dem das eigene Fahrzeug den Punkt passiert hat, ab dem eine erste Position des entsprechenden vorausfahrenden Fahrzeugs gespeichert worden war. In Kenntnis dieses Querversatzes und der gespeicherten Kursverläufe der vorausfahrenden Fahrzeuge kann ein eigener zukünftiger Kursbereich bestimmt werden.

Der Nachteil der bisherigen Ansätze zur Bestimmung eines eigenen zukünftigen Kursbereichs ist darin zu sehen, daß der frühestmögliche Zeitpunkt einer Kursbereichsbestimmung der Zeitpunkt ist, zu dem ein Punkt passiert wird, an dem eine Position eines vorausfahrenden Fahrzeugs detektiert worden ist.

Aufgabe, Lösung und Vorteile der Erfindung

Die Aufgabe der vorliegenden Erfindung ist es dementsprechend, ein Verfahren und eine darauf basierende Vorrichtung anzugeben, mit dem beziehungsweise mit der ein zukünftiger Kursbereich eines ersten Fahrzeugs zuverlässig bestimmt werden kann. Dieser Kursbereich soll insbesondere auch dann zuverlässig und frühzeitig bestimmbar sein, wenn vorausfahrende Fahrzeuge erstmals detektiert werden.

Erfindungsgemäß wird diese Aufgabe dadurch gelöst, daß der zukünftige Kursbereich des ersten Fahrzeugs wenigstens anhand eines in Richtung auf die Position des ersten Fahrzeugs projizierten Kursverlaufs eines vorausfahrenden Fahrzeugs bestimmt wird. Das bedeutet, daß der erfaßte Kursverlauf des vorausfahrenden Fahrzeugs in einen Bereich vor das erste Fahrzeug projiziert wird, in dem keine gemessenen Positionen des vorausfahrenden Fahrzeugs vorliegen.

Der Vorteil des erfindungsgemäßen Verfahrens beziehungsweise der erfindungsgemäßen Vorrichtung liegt darin, daß die Bestimmung des zukünftigen Kursbereichs des ersten Fahrzeugs bereits möglich ist, bevor eine Position erreicht worden ist, an der ein vorausfahrendes Fahrzeug detektiert worden ist. Durch diese Erfindung können je nach Geschwindigkeit des eigenen Fahrzeugs und Reichweite des Abstandssensors bis zu zwei Sekunden gegenüber bisherigen Verfahren und Vorrichtungen gewonnen werden, in denen bereits eine Bestimmung des zukünftigen Kursbereichs des eigenen Fahrzeugs möglich ist. Dies kann zu einer Entlastung des Fahrers des ersten Fahrzeugs und zu einer Erhöhung der allgemeinen Fahrsicherheit beitragen.

Vorteilhafterweise kann die Projizierung des Kursverlaufs des vorrausfahrenden Fahrzeugs bis zu der Position erfolgen, an der sich das erste Fahrzeug befindet. Dies ermöglicht dem System die maximale Ausnutzung der gespeicherten Daten zur Bestimmung des zukünftigen Kursbereichs des ersten Fahrzeugs.

Gemäß einer bevorzugten Ausführung der Erfindung wird dazu zwischen dem projizierten Kursverlauf des vorausfahrenden Fahrzeugs und dem aktuellen Kursverlauf des ersten Fahrzeugs ein Querversatz und/oder eine Krümmung bestimmt. Mit Hilfe des Querversatzes und/oder der Krümmung des Kursverlaufs des ersten Fahrzeugs zum projizierten Kursverlauf des vorausfahrenden Fahrzeugs wird ein zukünftiger Kursbereich des ersten Fahrzeugs bestimmt. Diese Ausführung bietet den Vorteil, daß zur Bestimmung des zukünftigen Kursbereichs des ersten Fahrzeugs auch ein projizierter Kursverlauf eines vorausfahrenden Fahrzeugs genutzt werden kann, das sich nicht in der gleichen Fahrspur bewegt, wie das erste Fahrzeug.

Gemäß einer vorteilhaften Weiterbildung der Erfindung, wird der zukünftige Kursbereich anhand von projizierten Kursverläufen mehrerer vorausfahrender Fahrzeuge bestimmt. Dabei wird ein Fahrspurwechsel eines einzelnen vorausfahrenden Fahrzeugs durch Vergleich, Korrelation oder Mittelung der projizierten Kursverläufe aller vorausfahrenden Fahrzeuge herausgefiltert. Diese Weiterbildung führt insbesondere beim Vorhandensein vieler anderer Verkehrsteilnehmer zu einer verbesserten Zuverlässigkeit des erfindungsgemäßen Verfahrens beziehungsweise der erfindungsgemäßen Vorrichtung. Es können somit alle projizierten Kursverläufe vorausfahrender Fahrzeuge zur Bestimmung des Kursbereichs des ersten Fahrzeugs genutzt werden, was eine Verbesserung der Zuverlässigkeit des bestimmten Kursbereichs zur Folge hat.

Weiterhin vorteilhaft ist es, die gespeicherten Kursverläufe der vorausfahrenden Fahrzeuge zu ausgewählten und/oder frei wählbaren Zeitpunkten dem aktuellen Koordinatensystem des ersten Fahrzeugs anzugleichen. Dies hat den Vorteil, daß der Speicher zur Aufnahme der projizierten Kursverläufe vorausfahrender Fahrzeuge sehr gut ausgenutzt werden kann, da eine auf das aktuelle Koordinatensystem des ersten Fahrzeugs umgerechnete detektierte Position eines vorausfahrenden Fahrzeugs somit eine Relativposition zum ersten Fahrzeug darstellt und die zu speichernden Daten beispielsweise nur aus einer Entfernungs- und einer Winkelangabe bestehen können.

Vorteilhafterweise erfolgt die Projizierung des Kursverlaufs des vorausfahrenden Fahrzeugs durch statistische Analysen und/oder mathematische Interpolationsverfahren der gespeicherten relativen Positionsdaten. Diese Analysemöglichkeit beziehungsweise diese Interpolationsverfahren ermöglichen eine sehr exakte Bestimmung des zu projizierenden Kursverlaufs.

Besonders Vorteilhaft ist es, die projizierten Kursverläufe der vorausfahrenden Fahrzeuge durch wenigstens ein Gütekriterium zu bewerten, das sowohl statistische als auch nicht vorhersagbare Anteile und vorhersagbare Anteile enthält. Damit ist es vorteilhafterweise möglich, einen projizierten Kursverlauf eines vorausfahrenden Fahrzeugs, der ein Gütekriterium aufweist, das unterhalb eines bestimmten Schwellwertes liegt, aus dem Speicher zu löschen und/oder zur Bestimmung des zukünftigen Kursbereichs des ersten Fahrzeugs nicht mit heranzuziehen. Auf diese Weise wird zum einen die Ausnutzung des Speichers verbessert, da Daten, die zur Bestimmung des zukünftigen Kursbereichs des ersten Fahrzeugs weniger gut geeignet sind, aus dem Speicher gelöscht werden. Zum anderen besteht hierdurch die Möglichkeit, weniger gut geeignete Daten nicht zur Bestimmung des Kursbereichs heranzuziehen, was zu einer genaueren Bestimmung führt.

Gemäß einer Weiterbildung wird der Speicher als Ringspeicher organisiert. Diese Weiterbildung hat den Vorteil, daß die Speicherverwaltung vereinfacht und somit die Bestimmung des zukünftigen Kursverlaufs des eigenen Fahrzeugs beschleunigt wird. Insbesondere sind bei dieser Art von Speicherorganisation keine Verschiebungen von Daten innerhalb des Speichers notwendig. Anschaulich gesprochen wird der älteste für einen Kursverlauf eines vorausfahrenden Fahrzeugs gespeicherte Datenwert durch den aktuell erfaßten Wert ersetzt und lediglich ein entsprechender Verweis auf den Speicherplatz geändert.

Vorteilhaft ist weiterhin, daß, wenn der Speicher voll ist, zur Speicherung wenigstens eines neuen Kursverlaufs eines weiteren vorausfahrenden Fahrzeugs, entsprechend eines weiteren Gütekriteriums, das nur auf vorhersagbaren Anteilen beruht, entschieden wird, ob wenigstens einer der bisher gespeicherten Kursverläufe und/oder der wenigstens eine neue Kursverlauf gelöscht wird. Dies bedeutet, daß bei vollem Speicher mittels eines Gütekriteriums bestimmt wird, ob ein bisher gespeicherter Kursverlauf gelöscht wird, oder, ob die neu erfaßten Daten eine schlechtere Güte haben als alle im Speicher abgelegten Kursverläufe und somit die neu erfaßten Daten verworfen werden.

Gemäß einer vorteilhaften Weiterbildung der Erfindung wird der zukünftige Kursbereich anhand von Positionen detektierter, stationärer Objekte oder anhand von Positionen detektierter, entgegenkommender Fahrzeuge begrenzt. Diese Weiterbildung hat den Vorteil, daß die Bestimmung des zukünftigen Kursbereichs des ersten Fahrzeugs sinnvoll eingegrenzt werden kann, was die Genauigkeit des bestimmten Kursbereichs deutlich erhöht. Außerdem fließen auf diese Weise weitere, unabhängige Daten in die Bestimmung des zukünftigen Kursbereichs ein.

Gemäß einer besonders bevorzugten Ausgestaltung der Erfindung wird zusätzlich zu dem erfindungsgemäß bestimmten, ersten zukünftigen Kursbereich mindestens ein weiterer zukünftiger Kursbereich anhand eines Lenkwinkels, eines Lenkradwinkels, einer Gierrate, einer Differenz von Radgeschwindigkeiten oder einer Querbeschleunigung des geregelten Fahrzeugs oder anhand stationärer Objekte oder anhand entgegenkommender Fahrzeuge die von dem Abstandssensor des ersten Fahrzeugs detektiert werden, bestimmt. Anhand des ersten und des mindestens einen weiteren bestimmten, zukünftigen Kursbereichs wird sodann ein verifizierter zukünftiger Kursbereich bestimmt. Dies bedeutet anschaulich gesprochen, daß ein zukünftiger Kursbereich des geregelten Fahrzeugs anhand unterschiedlicher und voneinander unabhängiger Verfahren bestimmt wird. Durch eine Kombination dieser einzeln bestimmten, zukünftigen Kursbereiche können bei den Verfahren einzeln auftretende Fehler korrigiert werden, so daß der verifizierte zukünftige Kursbereich eine optimale Voraussage des tatsächlichen Kursbereichs beinhaltet.

Ein besonderer Vorteil des erfindungsgemäßen Verfahrens und der erfindungsgemäßen Vorrichtung ist, daß der zukünftige Kursbereich anhand von Meßdaten bestimmt wird, die tatsächlich im Vorfeld des geregelten Fahrzeugs liegen und diese Daten in Richtung der eigenen Position projiziert werden. Anstelle einer Schätzung durch eine Extrapolation einer momentanen Situation erfolgt eine Auswertung der tatsächlich im Vorfeld des Fahrzeugs vorhandenen Situation. Auf diese Weise ist insbesondere eine frühzeitige Erkennung von einem Kurvenbeginn oder -ende möglich. Dadurch wird die Fehlerquote gegenüber bisher bekannten Verfahren deutlich verringert. Ein weiterer Vorteil ist, daß das Verfahren unabhängig ist von besonderen infrastrukturellen Bedingungen wie beispielsweise extra vorgesehenen Reflektoren am Straßenrand. Sind entsprechende Reflektoren jedoch vorhanden, können sie entsprechend mit berücksichtigt werden. Darüber hinaus läßt sich das Verfahren bei einem Fahrzeug, welches mit einer adaptiven Geschwindigkeitsregelung ausgerüstet ist ohne besonderen Aufwand, insbesondere ohne eine zusätzliche Bildaufnahme- und Bildauswerteeinrichtung realisieren.

Anschaulich gesprochen erfolgt eine Beobachtung der Bewegung eines oder mehrerer vorausfahrender Fahrzeuge zur Bestimmung des eigenen zukünftigen Kursverlaufs bzw. Kursbereichs. Hierbei wird, solange noch keine detektierte Postion eines vorausfahrenden Fahrzeugs mit dem eigenen Fahrzeug erreicht ist, der detektierte Kursverlauf der vorausfahrenden Fahrzeuge in Richtung auf die eigene Position projiziert. Somit ist eine Kursbereichsbestimmung für das eigene Fahrzeug möglich, schon bevor eine Position erreicht worden ist, an der ein vorausfahrendes Fahrzeug detektiert wurde.

Beschreibung von Ausführungsbeispielen

Nachfolgend werden Ausführungsbeispiele der Erfindung anhand einer Zeichnung erläutert. Es zeigen

Figur 1 eine Prinzipdarstellung einer erfindungsgemäßen Vorrichtung,

Figur 2 und Figur 3 zwei Prinzipskizzen zur Erläuterung des erfindungsgemäßen Verfahrens,

Figur 4 ein Flußdiagramm gemäß dem oben genannten Stand der Technik,

Figur 5 ein weiteres Flußdiagramm gemäß dem oben genannten Stand der Technik,

Figur 6 ein weiteres Flußdiagramm gemäß dem oben genannten Stand der Technik zur detaillierteren Erläuterung des Verfahrens und

Figur 7 eine Prinzipskizze zur Erläuterung des erfindungsgemäßen Verfahrens.

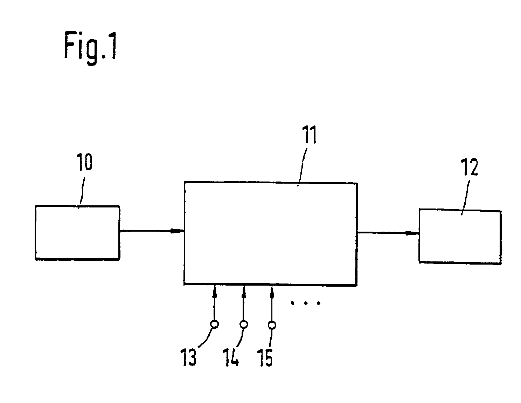

Figur 1 zeigt eine Vorrichtung zur Durchführung des erfindungsgemäßen Verfahrens. Ein Abstandssensor 10, beispielsweise ein Radar- oder ein Lasersensor, ist mit einer Auswerte- und Steuereinheit 11 verbunden. Die Auswerte- und Steuereinheit 11 erhält zahlreiche weitere Signale, von denen hier beispielhaft ein Eingang 13 für eine Fahrzeugeigengeschwindigkeit, ein Eingang 14 für einen Lenkwinkel und ein Eingang 15 für eine Gierrate dargestellt sind. Weiterhin ist die Auswerte- und Steuereinheit 11 mit einem oder mehreren Aktuatoren 12 verbunden. Die gesamte Vorrichtung ist in ein erstes Fahrzeug eingebaut. Mit dem Abstandssensor 10 werden nach bekannten Verfahren vorausfahrende Fahrzeuge, entgegenkommende Fahrzeuge sowie stationäre Objekte auf und beiderseits der Fahrbahn detektiert. Entsprechende Meßdaten werden aufbereitet und der Auswerte- und Steuereinheit 11 zugeführt. Diese bestimmt, entsprechend dem nachfolgend beschriebenen Verfahren, wenigstens einen zukünftigen Kursbereich des ersten Fahrzeugs. Im Rahmen einer adaptiven Geschwindikeitsregelung steuert oder regelt die Auswerte-und Steuereinheit 11 über den oder die Aktuatoren 12 die Geschwindigkeit des Fahrzeugs. Alternativ oder ergänzend steuert sie über Aktuatoren 12 beispielsweise die Leuchtweite oder den Lichtkegel der Scheinwerfer des Fahrzeugs oder erzeugt ein Warnsignal, das auf eine kritische Situation hindeutet.

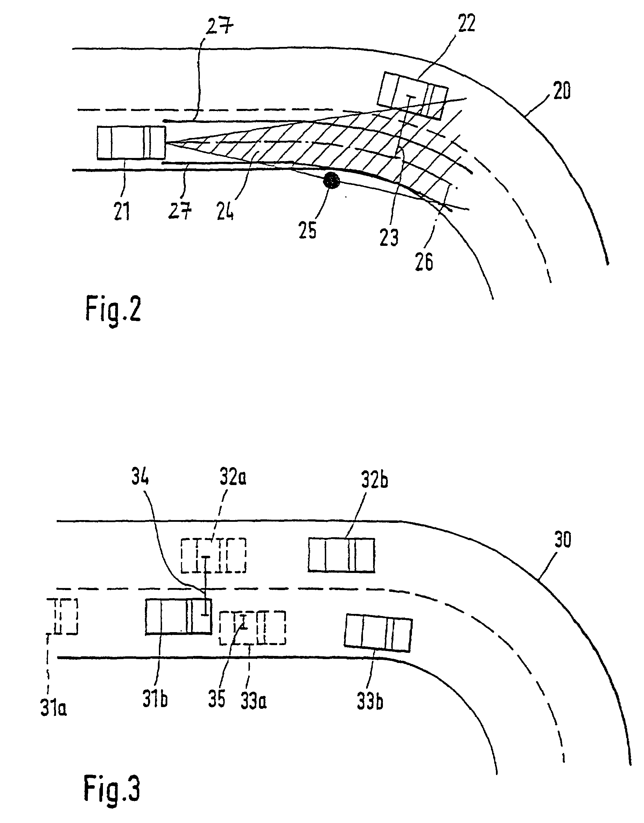

Figur 2 zeigt eine zweispurige Straße 20, auf der sich zwei Fahrzeuge 21 und 22 in gleicher Richtung bewegen. Mit 21 ist das Fahrzeug bezeichnet, welches die erfindungsgemäße Vorrichtung besitzt. Ausgehend von der Front des Fahrzeugs 21 ist ein Winkelbereich 24 skizziert, der den Erfassungsbereich des Abstandssensors 10 symbolisiert. Eine strichpunktierte Linie 26 zeigt den zukünftigen Kursverlauf des Fahrzeugs 21. Die beiden durchgezogenen Linien 27 kennzeichnen den zukünftigen Kursbereich des Fahrzeugs 21. Dieser zukünftige Kursbereich ergibt sich aus dem um die Fahrzeugbreite und eventuellen zusätzlichen Erweiterungen aufgeweiteten zukünftigen Kursverlauf 26 des Fahrzeugs 21. Eine Strecke 23 gibt einen seitlichen Querversatz q zwischen den Fahrzeugen 21 und 22 an. Mit 25 ist ein stationäres Objekt, beispielsweise ein Baum am Straßenrand skizziert. Figur 3 zeigt ebenfalls eine zweispurige Straße 30, auf der drei Fahrzeuge 31, 32 und 33 zu zwei verschiedenen Zeitpunkten $t_0$ und $t_1$ dargestellt sind. Die Positionen der Fahrzeuge zum Zeitpunkt $t_0$ sind gestrichelt dargestellt und mit 31a, 32a und 33a bezeichnet. Die Positionen der Fahrzeuge zum Zeitpunkt $t_1$ sind mit 31b, 32b und 33b bezeichnet. Zwei Strecken 34 und 35 bezeichnen jeweils einen Querversatz $q_1$ und $q_2$ zwischen dem Fahrzeug 31 und 32 und zwischen dem Fahrzeug 31 und 33.

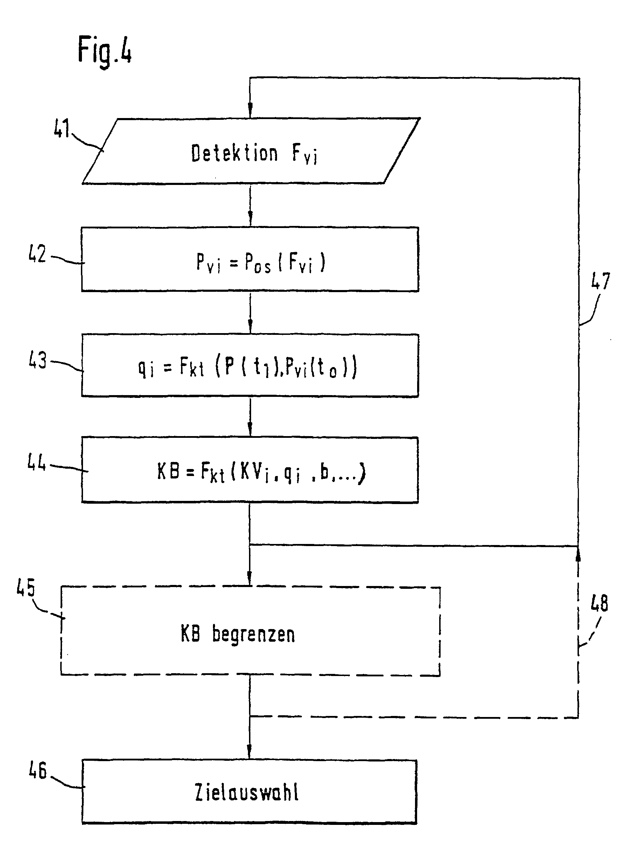

Figur 4 zeigt ein Flußdiagramm gemäß dem oben genannten Stand der Technik. Gemäß Schritt 41 werden mit Hilfe des Abstandssensors 10 vorausfahrende Fahrzeuge Fvi detektiert. Gemäß Figur 2 und Figur 3 werden dabei die Fahrzeuge 22 sowie 32 und 33 detektiert. In Schritt 42 wird eine Position $P_{vi}$ jedes einzelnen vorausfahrenden Fahrzeugs bestimmt. Dieser Schritt kann je nach Realisierung entweder von einer Auswerteschaltung innerhalb des Abstandssensors 10 oder von der Auswerte- und Steuereinheit 11 durchgeführt werden. Die bestimmten Positionen $P_{vi}$ der vorausfahrenden Fahrzeuge Fvi beinhalten eine Entfernung $d_i$ und einen Winkel $\alpha_i$. Gemäß Schritt 43 wird ein Querversatz $q_i$, der in den Figuren 2 und 3 durch die Strecken 23, 34 und 35 angegeben ist, bestimmt. Rein mathematisch ergibt sich der Querversatz $q_i$ zu

$$q_i = d_i * \sin\alpha_i.$$

Da in dieser Beziehung jedoch die Krümmung der Straße 20 bzw. 30 und ein daraus folgender zusätzlicher Querversatz der Fahrzeuge $F_{vi}$ nicht berücksichtigt ist, wird der jeweilige Querversatz $q_i$ anhand der Position P des Fahrzeugs 31 zum Zeitpunkt $t_1$ und der Position $P_{vi}$ des vorausfahrenden Fahrzeugs 32, 33 zum Zeitpunkt $t_0$ bestimmt. Mit anderen Worten wird der Querversatz $q_i$ dabei jeweils erst dann bestimmt, wenn sich das erste Fahrzeug 31 an oder neben der Position befindet, die das jeweilige vorausfahrende Fahrzeug einen oder mehrere Meßzeitpunkte vorher inne hatte.

Gemäß Schritt 44 wird nun der zukünftige Kursbereich KB des geregelten Fahrzeugs 21, 31 aufgrund einer angenommenen Breite b des ersten Fahrzeugs, anhand der Kursverläufe $KV_i$ der vorausfahrenden Fahrzeuge $F_{vi}$, anhand deren jeweiligem Querversatz $q_i$ und gegebenenfalls anhand zuvor bestimmter Kursverläufe bestimmt. Dabei wird die Annahme zugrunde gelegt, daß sich das erste Fahrzeug so weiterbewegen wird wie das oder die vorausfahrenden Fahrzeuge. Bei Erkennen eines beabsichtigten oder beginnenden Spurwechsels des ersten Fahrzeugs, beispielsweise in Abhängigkeit eines Blinkersignals, wird der bestimmte voraussichtliche Kursbereich in die entsprechende Richtung erweitert. Dies unterscheidet den bestimmten zukünftigen Kursbereich KB von einer reinen Vorhersage des Straßenverlaufs. Gemäß 47 erfolgt die Bestimmung des zukünftigen Kursbereichs KB des ersten Fahrzeugs iterativ, das heißt es schließt sich hier ein neuer Bestimmungszyklus an. Gemäß Schritt 45, wird der bestimmte zukünftige Kursbereich anhand stationärer Objekte 25 und, soweit vorhanden, anhand detektierter entgegenkommender Fahrzeuge $F_G$, die in den Figuren 2 und 3 nicht gezeigt sind, begrenzt.

Der nachfolgende Schritt 46 bezieht sich auf die Anwendung im Rahmen einer adaptiven Fahrgeschwindigkeits- und Abstandsregelung. Hier erfolgt nun die Auswahl eines vorausfahrenden Fahrzeugs als Regelungsziel für die Abstandsregelung. Dabei werden nun nur diejenigen vorausfahrenden Fahrzeuge berücksichtigt, die sich innerhalb des bestimmten zukünftigen Kursbereichs KB befinden. Befinden sich mehrere vorausfahrende Fahrzeuge in diesem Bereich, erfolgt eine Auswahl danach, welches der vorausfahrenden Fahrzeuge eine geringste Sollbeschleunigung bzw. eine größte Sollverzögerung bei dem geregelten Fahrzeug erfordert. Die Auswahl kann jedoch alternativ oder ergänzend auch von anderen Kriterien abhängig gemacht werden. Beispielsweise kann die Auswahl danach erfolgen, welches der vorausfahrenden Fahrzeuge den geringsten Abstand zu dem ersten, geregelten Fahrzeug aufweist. Mit 48 ist die iterative Wiederholung des Verfahrens dargestellt.

Figur 5 zeigt ein weiteres Flußdiagramm gemäß dem oben genannten Stand der Technik. Die Schritte 51 bis 54 entsprechen dabei den Schritten 41 bis 44 gemäß dem Stand der Technik nach Figur 4. Entsprechend dieses zweiten Beispiels aus dem Stand der Technik, erfolgt dann in Schritt 55 eine Bestimmung eines verifizierten, zukünftigen Kursbereichs KBver. Zu diesem Zweck werden gemäß 56 weitere Meßdaten, insbesondere ein anderweitig bestimmter, zukünftiger Kursbereich $KB_2$ verwendet. Dieser anderweitig bestimmte, zukünftige Kursbereich $KB_2$ kann beispielsweise anhand der im Stand der Technik bekannten Verfahren mit Hilfe einer Gierrate oder einer Querbeschleunigung bestimmt werden. Durch die Verknüpfung mehrerer, voneinander unabhängig bestimmter zukünftiger Kursbereiche wird eine jeweils vorhandene Fehlerquote weiter minimiert. Im einfachsten Fall erfolgt die Verknüpfung der beiden bestimmten zukünftigen Kursbereiche KB und $KB_2$ dadurch, daß der erste bestimmte Kursbereich KB verwendet wird, solange eine festgelegte minimale Anzahl vorausfahrender Fahrzeuge detektiert wird. Werden weniger vorausfahrende Fahrzeuge als diese festgelegte Zahl detektiert, wird der zukünftige Kursbereich $KB_2$ verwendet. Alternativ können die Daten der beiden bestimmten Kursbereiche KB und $KB_2$ auch miteinander korreliert werden, um den verifizierten Kursbereich Kbver zu erhalten. Gemäß 58 erfolgt auch die Bestimmung des zukünftigen verifizierten Kursbereichs iterativ. Schritt 57 entspricht dem Schritt 46 aus Figur 4 und beinhaltet wiederum eine Zielauswahl eines vorausfahrenden Fahrzeugs im Rahmen einer adaptiven Fahrgeschwindigkeits- und Abstandsregelung.

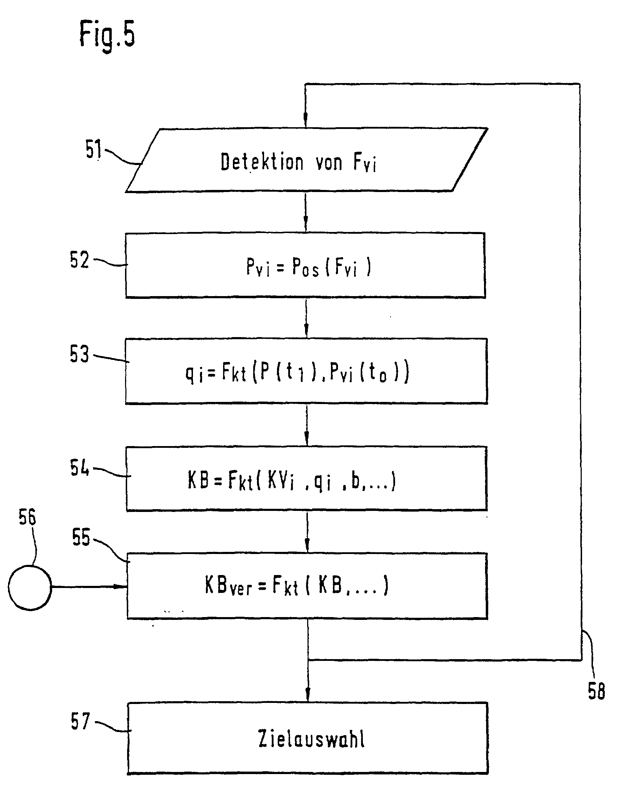

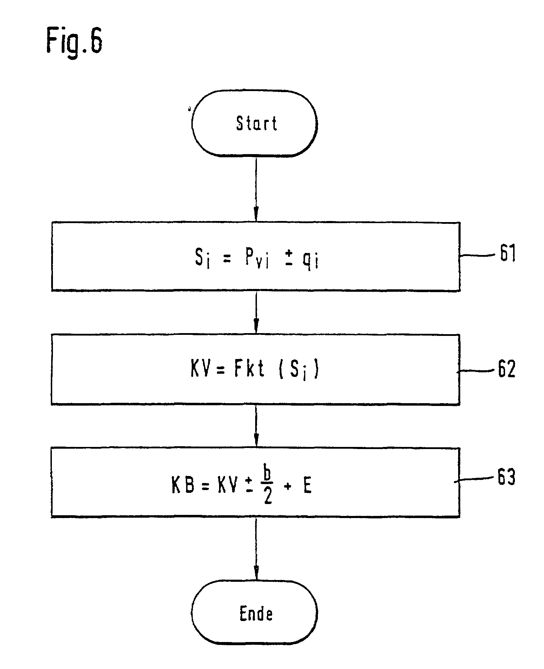

Figur 6 zeigt ein weiteres Flußdiagramm gemäß dem oben genannten Stand der Technik zur detaillierteren Darstellung der Verfahrensschritte zur Bestimmung des zukünftigen Kursbereichs KB gemäß den Schritten 44 und 54 der Figuren 4 und 5. Dementsprechend können die Schritte 61 bis 63 anstelle der Schritte 44 und 54 in den Figuren 4 und 5 eingefügt werden. In Schritt 61 werden Stützstellen $S_i$ bestimmt, indem die Positionen $P_{vi}$ der detektierten vorausfahrenden Fahrzeuge $F_{vi}$ mit den zugehörigen bestimmten Querversätzen $q_i$ verrechnet werden. Im Idealfall liegen dann alle bestimmten Stützstellen $S_i$ auf einer Kurve, die dem zukünftigen Kursverlauf KV des ersten Fahrzeugs entspricht. In Schritt 62 wird dieser Kursverlauf KV bestimmt, indem eine Funktion, beispielsweise in Form eines Polynoms bestimmt wird, die möglichst alle Stützstellen $S_i$ zumindest näherungsweise erfaßt. Dies bestimmte Funktion beschreibt dann den zukünftigen Kursverlauf KV. In Schritt 63 wird dann der zukünftige Kursbereich KB bestimmt, indem der Kursverlauf KV um die Breite b des ersten Fahrzeugs aufgeweitet wird. Zusätzlich erfolgt gegebenenfalls eine weitere Erweiterung E in Abhängigkeit von erkannten Spurwechselsignalen des ersten Fahrzeugs.

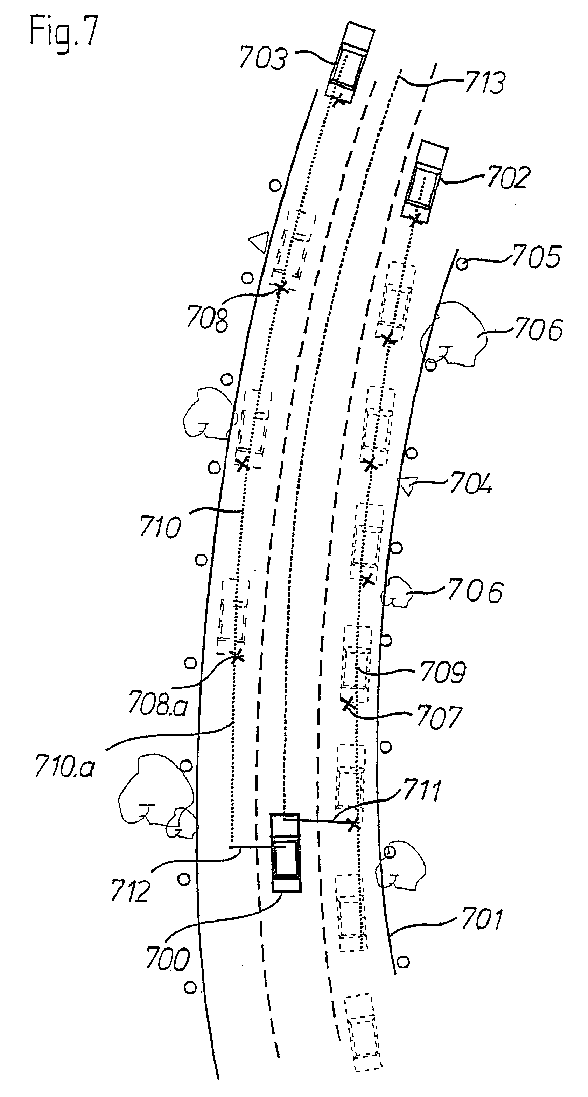

Figur 7 zeigt eine Prinzipskizze zur Erläuterung des erfindungsgemäßen Verfahrens. Mit 700 ist dabei das erste Fahrzeug bezeichnet, das auf einer mehrspurigen Straße 701 fährt. Im weiteren Verlauf der Straße 701 sind zwei vorausfahrende Fahrzeuge 702 und 703 dargestellt. Am Rand der Straße 701 befinden sich weiterhin Verkehrszeichen 704, Leitpfosten 705 und Bäume, die mit 706 gekennzeichnet sind. Es ist erkennbar, daß sich das erste Fahrzeug 700 auf der mittleren Spur der dreispurigen Straße 701 bewegt. Das vorausfahrende Fahrzeug 702 bewegt sich relativ zum Fahrzeug 700 auf der rechten Spur, während sich das vorausfahrende Fahrzeug 703 relativ zum ersten Fahrzeug 700 auf der linken Spur fortbewegt. Das erste Fahrzeug 700 ist mit einem Abstandssensor ausgerüstet, mit dem Positionen vorausfahrender Fahrzeuge detektiert werden. Die detektierten Positionen des vorausfahrenden Fahrzeugs 702 sind als Kreuze dargestellt und mit 707 bezeichnet. Die detektierten Positionen des vorausfahrenden Fahrzeugs 703 sind ebenfalls als Kreuze dargestellt und mit 708 bezeichnet. Im Fall des vorausfahrenden Fahrzeugs 702 ist erkennbar, daß vom ersten Fahrzeug 700 bereits Positionen des Fahrzeugs 702 detektiert worden sind, die wenigstens auf gleicher Höhe mit dem ersten Fahrzeug 700 oder sogar auf der zurückliegenden Wegstrecke liegen. Mit Hilfe der so detektierten Positionen 707, die in einem Speicher abgelegt worden sind, läßt sich eine Ausgleichskurve bestimmen, die den Kursverlauf 709 des vorausfahrenden Fahrzeugs 702 repräsentiert. In Kenntnis des Kursverlaufs des vorausfahrenden Fahrzeugs 702 und der bekannten Position des ersten Fahrzeugs 700 läßt sich leicht der Querversatz 711 zwischen dem ersten Fahrzeug 700 und dem Kursverlauf 709 des vorausfahrenden Fahrzeugs 702 bestimmen. Unter der Annahme, daß das vorausfahrende Fahrzeug 702 das einzige vorausfahrende Fahrzeug wäre, würde auf der Grundlage des bekannten Kursverlaufs 709 des vorausfahrenden Fahrzeugs 702 und des bekannten Querversatzes 711 die Bestimmung des zukünftigen Kursverlaufs des ersten Fahrzeugs 700 möglich sein. Dieser zukünftige Kursverlauf des ersten Fahrzeugs 700 würde sich, bei nur einem vorausfahrenden Bezugsfahrzeug 702, um den Querversatz 711 parallel verschoben zum Kursverlauf 709 bewegen.

Im Fall des vorausfahrenden Fahrzeugs 703 liegen noch keine detektierten Positionen 708 vor, die sich wenigstens auf gleicher Höhe mit dem ersten Fahrzeug 700 befinden. Die erste detektierte Position des Fahrzeugs 703 ist mit 708.a gekennzeichnet und liegt noch vor der derzeitigen Position des ersten Fahrzeugs 700. Aufgrund der detektierten Positionen 708 des Fahrzeugs 703 ließe sich, analog zum Vorgehen beim Fahrzeug 702, eine Ausgleichsgrade 710 bestimmen, die den Kursverlauf des vorausfahrenden Fahrzeugs 703 repräsentiert. Wird der Kursverlauf 710 des Fahrzeugs 703 in Richtung des ersten Fahrzeugs 700 projiziert, bzw. interpoliert, so ergibt sich eine Verlängerung des Kursverlaufs 710 um den Verlauf 710.a, der bis an die aktuelle Position des ersten Fahrzeugs 700 heranragt. In Kenntnis dieses projizierten Kursverlaufs 710.a des Fahrzeugs 703 ist es möglich, einen Querversatz zwischen der derzeitigen Position des ersten Fahrzeugs 700 und dem projizierten Kursverlauf 710.a des Fahrzeugs 703 zu bestimmen. Dieser mit 712 bezeichnete Querversatz zum Fahrzeug 703 ist somit bestimmbar, obwohl das erste Fahrzeug 700 die Position der ersten Detektierung des Fahrzeugs 703, die mit 708.a gekennzeichnet ist, noch nicht erreicht hat. Somit sind aus Sicht des ersten Fahrzeugs 700 zwei Querversätze 711 und 712 zu vorausfahrenden Fahrzeugen 702 und 703 bekannt. Weiterhin sind die beiden Kursverläufe 709 und 710 der vorausfahrenden Fahrzeuge 702 und 703 bekannt. Mit diesen bekannten Daten ist es nunmehr möglich einen anhand von zwei vorausfahrenden Fahrzeugen verifizierten zukünftigen Kursverlauf des ersten Fahrzeugs 700 zu bestimmen. Dazu wird unter entsprechender Berücksichtigung der Querversätze 711 und 712 der Mittelwert der Kursverläufe 709 und 710 gebildet. Es ergibt sich ein bestimmter zukünftiger Kursverlauf des ersten Fahrzeugs 700 der in der Figur 7 mit 713 gekennzeichnet ist. Dieser bestimmte zukünftige Kursverlauf 713 wird analog zum Stand der Technik nach Figur 6 um die Fahrzeugbreite sowie eventuelle Erweiterungen aufgeweitet. Der so erweiterte Kursverlauf 713 des ersten Fahrzeugs 700 stellt den gesuchten zukünftigen Kursbereich des ersten Fahrzeugs 700 dar. Dieser bestimmte zukünftige Kursbereich ist der Übersicht halber in Figur 7 nicht dargestellt.

Alternativ kann statt der Bestimmung des Querversatzes zwischen dem ersten Fahrzeug 700 und den Kursverläufen 709 und 710 der vorausfahrenden Fahrzeuge 702 und 703 auch eine Krümmung zwischen dem aktuellen Kursverlauf des ersten Fahrzeugs 700 und den bestimmten Kursverläufen 709 und 710 der vorausfahrenden Fahrzeuge 702 und 703 bestimmt werden. In Kenntnis dieser bekannten Krümmungen zu den Kursverläufen vorausfahrender Fahrzeuge ist ebenfalls eine Bestimmung eines zukünftigen Kursverlaufs des ersten Fahrzeugs 700 möglich.

Die Bestimmung des zukünftigen Kursverlaufes des ersten Fahrzeugs 700 wird um so genauer, je mehr vorausfahrende Fahrzeuge detektiert und deren Kursverläufe bestimmt werden. In diesem Fall besteht die Möglichkeit, durch Vergleich, Korrelation oder Mittelung der projizierten Kursverläufe aller vorausfahrenden Fahrzeuge einen verifizierten zukünftigen Kursverlauf des ersten Fahrzeugs 700 zu bestimmen. Dabei können projizierte Kursverläufe von vorausfahrenden Fahrzeugen herausgefiltert werden, die z.B. abbiegen oder durch schnelle Spurwechsel zwischen den einzelnen Fahrspuren keinen zuverlässigen, für die Bestimmung des zukünftigen Kursbereichs geeigneten, Kursverlauf liefern.

Analytisch erfolgt die Umsetzung der detektierten relativen Positionsdaten 707 und 708 der vorausfahrenden Fahrzeuge 702 und 703 durch statistische Analysen und/oder durch mathematische Interpolationsverfahren. Das Ergebnis dieses Verfahrens sind die projizierten Kursverläufe der vorausfahrenden Fahrzeuge, die im Speicher des Abstandssensors des ersten Fahrzeugs 700 abgelegt werden. Innerhalb des Speichers, der vorzugsweise als Ringspeicher organisiert ist, werden die gespeicherten projizierten Kursverläufe der vorausfahrenden Fahrzeuge zu ausgewählten oder frei wählbaren Zeitpunkten dem aktuellen Koordinatensystem des ersten Fahrzeugs angeglichen. Durch diese Umrechnung liegen die projizierten Kursverläufe der vorausfahrenden Fahrzeuge näherungsweise zu jedem Zeitpunkt im gleichen Koordinatensystem wie dem Koordinatensystem des ersten Fahrzeugs 700 vor. Um bei der Bestimmung des zukünftigen Kursverlaufs des ersten Fahrzeug 700 von den relevantesten der bestimmten projizierten Kursverläufe der vorausfahrenden Fahrzeuge auszugehen, werden die projizierten Kursverläufe der vorausfahrenden Fahrzeuge durch ein Gütekriterium bewertet, das statistische als auch nicht vorhersagbare Anteile und vorhersagbare Anteile enthält. Aufgrund dieses Gütekriteriums kann bei Güten, die unterhalb eines bestimmten Schwellwertes liegen, entschieden werden, ob ein projizierter Kursverlauf eines vorausfahrenden Fahrzeugs als eher irrelevant bestimmt wird und somit aus dem Speicher gelöscht wird oder, ob z.B. die Relevanz des projizierten Kursverlaufs nur bedingt gegeben ist und dieser nicht für die Bestimmung des zukünftigen Kursbereichs des ersten Fahrzeugs herangezogen wird. Für den Fall, daß der Speicher des Abstandssensors des ersten Fahrzeugs 700 voll ist und detektierte relative Positionsdaten weiterer vorausfahrender Fahrzeuge vorliegen, wird entsprechend eines weiteren Gütekriteriums, das in diesem Fall jedoch nur auf vorhersagbaren Anteilen beruht, entschieden, ob der neu detektierte Kursverlauf eines vorausfahrenden Fahrzeugs so relevant ist, daß dafür ein bisher gespeicherter projizierter Kursverlauf eines vorausfahrenden Fahrzeugs gelöscht wird oder ob die neu detektierten relativen Positionsdaten verworfen werden.

Durch dieses Verfahren wird sichergestellt, daß sich zu jedem Zeitpunkt die relevantesten der projizierten Kursverläufe der vorausfahrenden Fahrzeuge im Speicher befinden.

Für den Fall, daß aufgrund besonderer Bedingungen oder Umstände der bestimmte zukünftige Kursbereich des ersten Fahrzeugs 700 über den Bereich der Straße 701 herausragen würde, wird der zukünftige Kursbereich anhand von stationären Objekten begrenzt. Dies können z.B., wie in Figur 7 gezeigt, Verkehrszeichen 704, Leitpfosten 705 oder Bäume und/oder Büsche 706 sein. Ebenso möglich ist eine Begrenzung des bestimmten zukünftigen Kursbereiches aufgrund von Positionen detektierter entgegenkommender Fahrzeuge. Diese letzte Möglichkeit ist in Figur 7 nicht dargestellt.

Wird ein weiterer zukünftiger Kursbereich des ersten Fahrzeugs 700 bestimmt, so ist eine Verifizierung des zukünftigen Kursbereichs des ersten Fahrzeugs 700 möglich. Dieser weitere zukünftige Kursbereich des ersten Fahrzeugs 700 kann beispielsweise anhand eines Lenkwinkels, eines Lenkradwinkels, einer Gierrate, einer Differenz von Radgeschwindigkeiten oder einer Querbeschleunigung des ersten Fahrzeuges oder anhand stationärer Objekte oder anhand entgegenkommender Fahrzeuge bestimmt werden. Auf diese Weise wird der zukünftige Kursverlauf bzw. der zukünftige Kursbereich des ersten Fahrzeugs 700 durch verschiedene Verfahren verifiziert, die vollkommen unabhängig voneinander sind. Dies ermöglicht die bestmögliche Bestimmung des zukünftigen Kursbereichs des ersten Fahrzeugs 700.

**Patentansprüche**

1. Verfahren zur Bestimmung eines zukünftigen Kursbereichs eines ersten Fahrzeugs (700), welches mit einem Abstandssensor ausgerüstet ist, wobei

   - mit Hilfe des Abstandssensors zu festgelegten oder wählbaren Zeitpunkten wenigstens relative Positionen (707, 708) wenigstens eines vorausfahrenden Fahrzeugs (702, 703) zum ersten Fahrzeug (700) bestimmt werden,
   - wenigstens diese bestimmten relativen Positionen (707, 708) in wenigstens einem Speicher abgelegt werden,
   - diese in dem Speicher abgelegten relativen Positionen (707, 708) jeweils einen Kursverlauf (709, 710) des entsprechenden vorausfahrenden Fahrzeugs (702, 703) bilden, und
   - der zukünftige Kursbereich des ersten Fahrzeugs (700) wenigstens anhand des Kursverlaufs (709, 710) des vorausfahrenden Fahrzeugs (702, 703) bestimmt wird,

**dadurch gekennzeichnet, daß**

- der Kursverlauf (709, 710) des vorausfahrenden Fahrzeugs (702, 703) in Richtung auf die Position des ersten Fahrzeugs (700) projiziert wird.

2. Verfahren nach Anspruch 1, **dadurch gekennzeichnet, daß** die Projizierung des Kursverlaufs des vorausfahrenden Fahrzeugs (702, 703) bis zu der Position erfolgt, an der sich das erste Fahrzeug befindet.

3. Verfahren nach Anspruch 1 oder 2, **dadurch gekennzeichnet, daß** zwischen dem projizierten Kursverlauf (709, 710, 710.a) des vorausfahrenden Fahrzeugs (702, 703) und dem aktuellen Kursverlauf des ersten Fahrzeugs (700) ein Querversatz (711, 712) und/oder eine Krümmung bestimmt wird.

4. Verfahren nach Anspruch 3, **dadurch gekennzeichnet, daß** mit Hilfe des Querversatzes (711, 712) und/oder der Krümmung des Kursverlaufes des ersten Fahrzeugs (700) zum projizierten Kursverlauf (709, 710, 710.a) des vorausfahrenden Fahrzeugs (702, 703) ein zukünftiger Kursbereich des ersten Fahrzeugs (700) bestimmt wird.

5. Verfahren nach Anspruch 4, **dadurch gekennzeichnet, daß** der zukünftige Kursbereich anhand von projizierten Kursverläufen (709, 710, 710.a) mehrerer vorausfahrender Fahrzeuge (702, 703) bestimmt wird und daß ein Fahrspurwechsel eines einzelnen vorausfahrenden Fahrzeugs (702, 703) durch Vergleich, Korrelation oder Mittelung der projizierten Kursverläufe aller vorausfahrenden Fahrzeuge (702, 703) herausgefiltert wird.

6. Verfahren nach Anspruch 1, **dadurch gekennzeichnet, daß** die gespeicherten Kursverläufe (709, 710, 710.a) der vorausfahrenden Fahrzeuge (702, 703) zu ausgewählten und/oder frei wählbaren Zeitpunkten dem aktuellen Koordinatensystem des ersten Fahrzeugs (700) angeglichen werden.

7. Verfahren nach Anspruch 1, **dadurch gekennzeichnet, daß** die Projizierung des Kursverlaufs (709, 710, 710.a) des vorausfahrenden Fahrzeugs (702, 703) durch statistische Analysen und/oder mathematische Interpolationsverfahren der gespeicherten relativen Positionsdaten (707, 708) erfolgt.

8. Verfahren nach Anspruch 1, **dadurch gekennzeichnet, daß** die projizierten Kursverläufe (709, 710, 710.a) der vorausfahrenden Fahrzeuge (702, 703) durch wenigstens ein Gütekriterium bewertet werden, das sowohl statistische als auch nicht vorhersagbare Anteile und vorhersagbare Anteile enthält.

9. Verfahren nach Anspruch 8, **dadurch gekennzeichnet, daß** ein projizierter Kursverlauf (709, 710, 710.a) eines vorausfahrenden Fahrzeugs (702, 703), der ein Gütekriterium aufweist, das unterhalb eines bestimmten Schwellwertes liegt,

- aus dem Speicher gelöscht wird und/oder
- zur Bestimmung des zukünftigen Kursbereichs des ersten Fahrzeugs (700) nicht mit herangezogen wird.

10. Verfahren nach Anspruch 1, **dadurch gekennzeichnet, daß** der Speicher als Ringspeicher organisiert wird.

11. Verfahren nach Anspruch 1, **dadurch gekennzeichnet, daß**, wenn der Speicher voll ist, zur Speicherung wenigstens eines neuen Kursverlaufs eines weiteren vorausfahrenden Fahrzeugs, entsprechend eines weiteren Gütekriteriums, das nur auf vorhersagbaren Anteilen beruht, entschieden wird, ob wenigstens einer der bisher gespeicherte Kursverläufe und/oder der wenigstens eine neue Kursverlauf gelöscht wird.

12. Verfahren nach Anspruch 1, **dadurch gekennzeichnet, daß** der zukünftige Kursbereich anhand von Positionen detektierter, stationärer Objekte (704, 705, 706) oder anhand von Positionen detektierter, entgegenkommender Fahrzeuge begrenzt wird.

13. Verfahren nach Anspruch 1, **dadurch gekennzeichnet,**

- **daß** mindestens ein weiterer zukünftiger Kursbereich des ersten Fahrzeugs (700) anhand eines Lenkwinkels, eines Lenkradwinkels, einer Gierrate, einer Differenz von Radgeschwindigkeiten oder einer Querbeschleunigung des ersten Fahrzeugs (700) oder anhand stationärer Objekte oder anhand entgegenkommender Fahrzeuge, die von einem Abstandssensor des ersten Fahrzeugs (700) detektiert werden, bestimmt wird und
- **daß** anhand des ersten und des weiteren bestimmten zukünftigen Kursbereichs ein verifizierter zukünftiger Kursbereich bestimmt wird.

14. Vorrichtung zur Durchführung des Verfahrens nach Anspruch 1, beinhaltend,

- einen Abstandssensor, der zu festgelegten oder wählbaren Zeitpunkten wenigstens relative Positionen (707, 708) wenigstens eines vorausfahrenden Fahrzeugs (702, 703) zum ersten Fahrzeug (700) bestimmt,
- wenigstens ein Speicher, in dem diese bestimmten relativen Positionen (707, 708) abgelegt werden,
- Mittel, um aus diesen im Speicher abgelegten relativen Positionen (707, 708) jeweils einen Kursverlauf (709, 710) des entsprechenden vorausfahrenden Fahrzeugs (702, 703) zu bilden, und
- Mittel, um den zukünftigen Kursbereich des ersten Fahrzeugs (700) wenigstens anhand des Kursverlaufs (709, 710) des vorausfahrenden Fahrzeugs (702, 703) zu bestimmen,

**dadurch gekennzeichnet, daß**

- Mittel vorhanden sind, um den Kursverlauf (709, 710) des vorausfahrenden Fahrzeugs (702, 703) in Richtung auf die Position des ersten Fahrzeugs (700) zu projizieren.

## Claims

1. Method for determining a future course area of a first vehicle (700) which is equipped with a distance sensor,

   - at least relative positions (707, 708) of at least one vehicle (702, 703) which is travelling ahead being determined at fixed or selectable times using the distance sensor,
   - at least these specific relative positions (707, 708) are stored in at least one memory,
   - these relative positions (707, 708) which are stored in the memory each form a course profile (709, 710) of the corresponding vehicle (702, 703) which is travelling ahead, and
   - the future course area of the first vehicle (700) is determined at least by reference to the course profile (709, 710) of the vehicle (702, 703) which is travelling ahead,

   **characterized in that**

   - the course profile (709, 710) of the vehicle (702, 703) which is travelling ahead is projected in the direction of the position of the first vehicle (700).

2. Method according to Claim 1, **characterized in that** the course profile of the vehicle (702, 703) which is travelling ahead is projected as far as the position at which the first vehicle is located.

3. Method according to Claim 1 or 2, **characterized in that** a lateral offset (711, 712) and/or curvature are determined between the projected course profile (709, 710, 710.a) of the vehicle (702, 703) which is travelling ahead and the current course profile of the first vehicle (700).

4. Method according to Claim 3, **characterized in that** a future course area of the first vehicle (700) is determined using the lateral offset (711, 712) and/or the curvature of the course profile of the first vehicle (700) with respect to the projected course profile (709, 710, 710.a) of the vehicle (702, 703) which is travelling ahead.

5. Method according to Claim 4, **characterized in that** the future course area is determined by reference to projected course profiles (709, 710, 710.a) of a plurality of vehicles (702, 703) which are travelling ahead, and **in that** a change of lane of an individual vehicle (702, 703) which is travelling ahead is filtered out by comparison, correlation or averaging of the projected course profiles of all the vehicles (702, 703) which are travelling ahead.

6. Method according to Claim 1, **characterized in that** the stored course profiles (709, 710, 710.a) of the vehicles (702, 703) which are travelling ahead are approximated to the current coordinate system of the first vehicle (700) at selected and/or freely selectable times.

7. Method according to Claim 1, **characterized in that** the course profile (709, 710, 710.a) of the vehicle (702, 703) which is travelling ahead is projected by means of statistical analyses and/or mathematical interpolation methods of the stored relative position data (707, 708).

8. Method according to Claim 1, **characterized in that** the projected course profiles (709, 710, 710.a) of the vehicles (702, 703) which are travelling ahead are evaluated by means of at least one quality criterion which contains both statistical and non-predictable components and predictable components.

9. Method according to Claim 8, **characterized in that** a projected course profile (709, 710, 710.a) of a vehicle (702, 703) travelling ahead and has a quality criterion which lies below a specific threshold value.

   - is deleted from the memory and/or
   - is not used in the determination of the future course area of the first vehicle (700).

10. Method according to Claim 1, **characterized in that** the memory is organized as a toroidal core memory.

**11.** Method according to Claim 1, **characterized in that** if the memory is full, in order to store at least one new course profile of a further vehicle which is travelling ahead, it is decided, in accordance with a further quality criterion which is based only on predictable components, whether at least one of the previously stored course profiles and/or the at least one new course profile is deleted.

**12.** Method according to Claim 1, **characterized in that** the future course area is delimited by reference to positions of detected stationary objects (704, 705, 706) or by reference to positions of detected oncoming vehicles.

**13.** Method according to Claim 1, **characterized**

- **in that** at least one further future course area of the first vehicle (700) is determined by reference to a steering angle, a steering wheel angle, a yaw rate, a difference between wheel speeds or a lateral acceleration of the first vehicle (700) or by reference to stationary objects or by reference to oncoming vehicles which are detected by a distance sensor of the first vehicle (700), and
- **in that** a verified future course area is determined by reference to the first and to the further specific future course area.

**14.** Device for carrying out the method according to Claim 1, containing

- a distance sensor which determines at least relative positions (707, 708) of at least one vehicle (702, 703) which is travelling ahead in relation to the first vehicle (700) at fixed or selectable times,
- at least one memory in which these specific relative positions (707, 708) are stored,
- means for forming in each case a course profile (709, 710) of the corresponding vehicle (702, 703) which is travelling ahead from these relative positions (707, 708) which are stored in the memory, and
- means for determining the future course area of the first vehicle (700) at least by reference to the course profile (709, 710) of the vehicle (702, 703) which is travelling ahead,

**characterized in that**

- there are means for projecting the course profile (709, 710) of the vehicle (702, 703) which is travelling ahead in the direction of the position of the first vehicle (700).

**Revendications**

**1.** Procédé pour déterminer une plage de trajectoire future d'un premier véhicule (700) équipé d'un capteur de distance selon lequel :

- à l'aide du capteur de distance on détermine, à des instants fixes ou des instants sélectionnés, au moins les positions relatives (707, 708) d'un véhicule précédent (702, 703) par rapport au premier véhicule (700),
- on enregistre au moins ces positions relatives déterminées (707, 708) dans au moins une mémoire,
- ces positions relatives (707, 708) enregistrées dans la mémoire forment chaque fois une trajectoire (709, 710) du véhicule précédent correspondant (702, 703) et
- la plage de trajectoire future du premier véhicule (700) se détermine au moins à l'aide de la trajectoire (709, 710) du véhicule précédent (702, 703),

**caractérisé en ce que**

- la trajectoire (709, 710) du véhicule précédent (702, 703) est projetée en direction sur la position du premier véhicule (700).

**2.** Procédé selon la revendication 1,
**caractérisé en ce que**
la projection de la trajectoire du véhicule précédent (702, 703) se fait jusqu'à la position à laquelle se trouve le premier véhicule.

**3.** Procédé selon l'une quelconque des revendications 1 ou 2,
**caractérisé en ce qu'**
on détermine un décalage transversal (711, 712) et/ou une courbure entre la trajectoire projetée (709, 710, 710.a) du véhicule précédent. (702, 703) et la trajectoire actuelle du premier véhicule (700).

**4.** Procédé selon la revendication 3,
**caractérisé en ce qu'**
à l'aide du décalage transversal (711, 712) et/ou de la courbure de la trajectoire du premier véhicule (700) par rapport à la trajectoire projetée (709, 710, 710.a) du véhicule précédent (702, 703) on détermine une plage de trajectoire future pour le premier véhicule (700).

**5.** Procédé selon la revendication 4,
**caractérisé en ce qu'**
on détermine la plage de trajectoire future à l'aide de trajectoires projetées (709, 710, 710.a) de plusieurs véhicules précédents (702, 703) et on sépare par filtrage un changement de couloir d'un seul véhicule précédent (702, 703) par comparaison, corrélation ou formation de la moyenne des trajectoires projetées de tous les véhicules précédents (702, 703).

6. Procédé selon la revendication 1,
**caractérisé en ce qu'**
on adapte les trajectoires enregistrées (709, 710, 710.a) des véhicules précédents (702, 703) à des instants sélectionnés et/ou qui peuvent être librement sélectionnés dans le système de coordonnées actuel du premier véhicule (700).

7. Procédé selon la revendication 1,
**caractérisé en ce qu'**
on projette les trajectoires (709, 710, 710.a) du véhicule précédent (702, 703) par des analyses statistiques et/ou des procédés d'interpolation mathématiques des données de positions relatives en mémoire (707, 708).

8. Procédé selon la revendication 1,
**caractérisé en ce qu'**
on évalue les trajectoires projetées (709, 710, 710.a) des véhicules précédents (702, 703) avec au moins un critère de qualité qui contient à la fois des parties statistiques et des parties non prévisibles et des parties prévisibles.

9. Procédé selon la revendication 8,
**caractérisé en ce qu'**
une trajectoire projetée (709, 710, 710.a) d'un véhicule précédent (702, 703) qui présente un critère de qualité inférieur à un seuil déterminé sera

- effacée de la mémoire et/ou
- non utilisée pour déterminer une plage de trajectoire future du premier véhicule (700).

10. Procédé selon la revendication 1,
**caractérisé en ce que**
la mémoire est organisée comme une mémoire en anneau.

11. Procédé selon la revendication 1,
**caractérisé en ce que**
si la mémoire est pleine, pour enregistrer au moins une nouvelle trajectoire d'un autre véhicule précédent, on décide en fonction d'un autre critère de qualité qui ne repose que sur la partie prévisible, si au moins l'une des trajectoires enregistrées jusqu'alors et/ou au moins la nouvelle trajectoire seront effacées.

12. Procédé selon la revendication 1,
**caractérisé en ce que**
la plage de trajectoire future est limitée à l'aide des positions détectées d'objets fixes (704, 705, 706) ou à l'aide de véhicules venant en face et dont les positions sont détectées.

13. Procédé selon la revendication 1,
**caractérisé en ce qu'**

- on détermine au moins une autre plage de trajectoire future du premier véhicule (700) à l'aide d'un angle de braquage, d'un angle de roue directrice, d'une vitesse de lacet, d'une différence entre les vitesses de roues ou d'une accélération transversale du premier véhicule (700), ou à l'aide d'objets stationnaires ou à l'aide de véhicules venant en face et qui ont été détectés par un détecteur de distance du premier véhicule (700), et
- à l'aide de la première plage de trajectoire future ainsi que d'autres plages de trajectoires futures déterminées on définit une plage de trajectoire future vérifiée.

14. Dispositif pour la mise en oeuvre du procédé selon la revendication 1, comportant

- un détecteur de distance qui détermine à des instants fixes ou librement sélectionnés par rapport à des positions relatives (707, 708), au moins un véhicule précédent (702, 703) par rapport au premier véhicule (700),
- au moins une mémoire dans laquelle on enregistre les positions relatives (707, 708),
- des moyens pour former, à partir des positions relatives (707, 708) enregistrées dans la mémoire, chaque fois une trajectoire (709, 710) du véhicule (702, 703) précédent et
- des moyens pour déterminer la plage de trajectoire future du premier véhicule (700), au moins à l'aide de la trajectoire (709, 710) du véhicule précédent (702, 703),

**caractérisé par**

- des moyens pour projeter la trajectoire (709, 710) du véhicule précédent (702, 703) en direction sur la position du premier véhicule (700).

Fig.1

Fig.2

Fig.3

EP 1 135 274 B1

# Fig.4

**41** Detektion $F_{vi}$

**42** $P_{vi} = P_{os}(F_{vi})$

**43** $q_i = F_{kt}(P(t_1), P_{vi}(t_0))$

**44** $KB = F_{kt}(KV_i, q_i, b, ...)$

**45** KB begrenzen

**46** Zielauswahl

**47**

**48**

## Fig.5

51 — Detektion von $F_{vi}$

52 — $P_{vi} = P_{os}(F_{vi})$

53 — $q_i = F_{kt}(P(t_1), P_{vi}(t_0))$

54 — $KB = F_{kt}(KV_i, q_i, b, ...)$

56

55 — $KB_{ver} = F_{kt}(KB, ...)$

58

57 — Zielauswahl

Fig.6

```
          ┌─────────┐
          │  Start  │
          └────┬────┘
               │
               ▼
┌─────────────────────────────────┐
│                                 │ ── 61
│        S_i = P_vi ± q_i          │
│                                 │
└────────────────┬────────────────┘
                 │
                 ▼
┌─────────────────────────────────┐
│                                 │ ── 62
│        KV = Fkt ( S_i )          │
│                                 │
└────────────────┬────────────────┘
                 │
                 ▼
┌─────────────────────────────────┐
│                                 │ ── 63
│        KB = KV ± b/2 + E         │
│                                 │
└────────────────┬────────────────┘
                 │
                 ▼
          ┌─────────┐
          │  Ende   │
          └─────────┘
```

Box 61: $S_i = P_{vi} \pm q_i$

Box 62: $KV = Fkt\ (S_i)$

Box 63: $KB = KV \pm \dfrac{b}{2} + E$

Fig.7